(19) Europäisches Patentamt
European Patent Office
Office européen des brevets

(11) EP 3 686 862 A1

(12) EUROPEAN PATENT APPLICATION
published in accordance with Art. 153(4) EPC

(43) Date of publication:
29.07.2020 Bulletin 2020/31

(51) Int Cl.:
G08G 1/16 (2006.01)     B60W 40/09 (2012.01)
G08G 1/00 (2006.01)

(21) Application number: 17925860.3

(22) Date of filing: 20.09.2017

(86) International application number:
PCT/JP2017/033920

(87) International publication number:
WO 2019/058460 (28.03.2019 Gazette 2019/13)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(71) Applicant: Nissan Motor Co., Ltd.
Yokohama-shi, Kanagawa 221-0023 (JP)

(72) Inventors:
• JANG Hwaseon
  Atsugi-shi
  Kanagawa 243-0123 (JP)
• HIRAMATSU Machiko
  Atsugi-shi
  Kanagawa 243-0123 (JP)
• SUNDA Takashi
  Atsugi-shi
  Kanagawa 243-0123 (JP)

(74) Representative: Grünecker Patent- und Rechtsanwälte
PartG mbB
Leopoldstraße 4
80802 München (DE)

(54) TRAVEL ASSISTANCE METHOD AND TRAVEL ASSISTANCE DEVICE

(57)     A travel assistance method and a travel assistance device according to the present invention identify a driver by using driving characteristics during manual driving by a driver and executes travel control corresponding to the identified driver, in a vehicle capable of switching manual driving by a driver and autonomous-driving.

FIG. 1

**Description**

TECHNICAL FIELD

The present invention relates to a travel assistance method and a travel assistance device of a vehicle.

BACKGROUND ART

Patent Literature 1 discloses that a travel history for each driver at the time of manual driving is managed, and at the time of autonomous-driving, a driving style suitable for each individual is provided with respect to a plurality of drivers.

CITATION LIST

PATENT LITERATURE

Patent Literature 1: Japanese Patent Laid-Open Publication No. 2016-216021

SUMMARY OF INVENTION

TECHNICAL PROBLEM

However, in the example disclosed in Patent Literature 1, a sensor for performing face recognition and fingerprint recognition is required for identifying a driver who is performing driving at the time of manual driving. Meanwhile, there is a method for identifying a driver based on a switch operation by the driver without using a sensor as described above for identifying an individual. However, when the driver forgets to turn on the switch or there is a setting omission, the method cannot handle the situation.

The present invention has been made in view of such a problem. It is an object of the present invention to provide a travel assistance method and a travel assistance device of a vehicle that identifies a driver without requiring a sensor for identifying a driver or redundant operations.

SOLUTION TO PROBLEM

In order to solve the above problem, a travel assistance method and a travel assistance device according to one aspect of the present invention identifies a driver by using driving characteristics during manual driving by a driver and executes travel control corresponding to the identified driver.

ADVANTAGEOUS EFFECTS OF INVENTION

According to the present invention, because a driver can be identified by using driving characteristics during manual driving, appropriate travel assistance suitable for the driver can be performed.

BRIEF DESCRIPTION OF DRAWINGS

[Fig. 1] Fig. 1 is a block diagram illustrating a configuration of a driving control system including a travel assistance device according to an embodiment of the present invention.
[Fig. 2] Fig. 2 is a flowchart illustrating a process procedure of learning of driving characteristics by the travel assistance device according to the embodiment of the present invention.
[Fig. 3] Fig. 3 is a schematic diagram illustrating a comparison between an unregistered learning result and a registered learning result in the travel assistance device according to the embodiment of the present invention.

DESCRIPTION OF EMBODIMENTS

Embodiments of the present invention are described below with reference to the accompanying drawings.

[Configuration of driving control system]

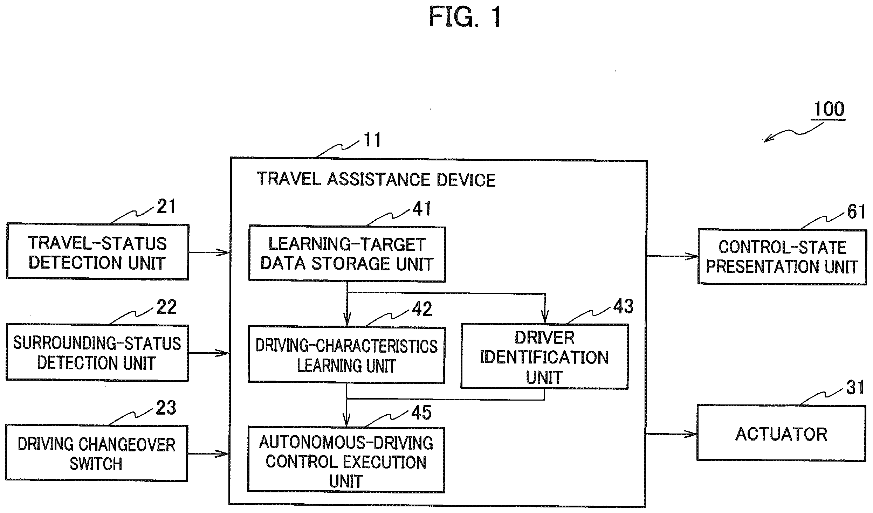

Fig. 1 is a block diagram illustrating a configuration of a driving control system 100 including a travel assistance device 11 according to the present embodiment. As illustrated in Fig. 1, the driving control system 100 according to the present embodiment includes the travel assistance device 11, a travel-status detection unit 21, a surrounding-status detection unit 22, a driving changeover switch 23, a control-state presentation unit 61, and an actuator 31.

The travel assistance device 11 is a controller that learns driving characteristics (learning of driving characteristics) based on predetermined learning target data, of pieces of travel data acquired during manual driving by a driver, in a vehicle capable of switching between manual driving by a driver and autonomous-driving, and performs processing to apply the learning result to travel control of autonomous-driving.

Further, in the present embodiment, a case where the travel assistance device 11 is mounted on a vehicle is described. However, a communication device can be installed in a vehicle and a part of the travel assistance device 11 can be installed in an external server so that the external server performs processing to learn driving characteristics of drivers. When the travel assistance device 11 is mounted on a vehicle, driving characteristics of a driver who owns or uses the vehicle can be learned. Pieces of learning target data during a predetermined period (for example, the latest one month) can be stored so as to be reflected in autonomous-driving of the vehicle owned or used by the driver. On the other hand, when the travel assistance device 11 is installed in an external server, since learning can be performed by using learning target data of the driver himself for a long period of time, a more stable learning result can be calculated. Further, when learning has not been completed yet, by utilizing pieces of learning target data of other drivers, driving characteristics of an average driver in the area can be reflected in autonomous-driving.

The travel-status detection unit 21 detects travel data indicating a travel state of a vehicle, such as a vehicle velocity and a steering angle, an acceleration rate, an inter-vehicular distance from a preceding vehicle, a relative velocity with respect to the preceding vehicle, a current position, a display state of a direction indicator, a lighting state of a headlight, and an operating condition of wipers. For example, as the travel-status detection unit 21, a sensor provided in a brake pedal or an accelerator pedal, a sensor that acquires the behavior of a vehicle such as a wheel sensor and a yaw-rate sensor, a laser radar, a camera, an in-vehicle network such as a CAN (Controller Area Network) that communicates data acquired from sensors thereof, and a navigation device are included.

The surrounding-status detection unit 22 detects environmental information representing an environment in which a vehicle is traveling, such as the number of lanes, a speed limit, a road grade, and a road curvature of a road on which the vehicle is traveling, a display state of a traffic light in front of the vehicle, a distance to an intersection in front of the vehicle, the number of vehicles that are traveling in front of the vehicle, an expected course at an intersection in front of the vehicle, and the presence of a temporary stop regulation. For example, a camera, a laser radar, and a navigation device mounted on a vehicle are included in the surrounding-status detection unit 22. The display state of a traffic light in front of the vehicle and the presence of a temporary stop regulation can be detected by using road-to-vehicle communication. The number of vehicles that are traveling in front of the vehicle can be detected by using a cloud service cooperated with vehicle-to-vehicle communication and a smartphone. The expected course at an intersection in front of the vehicle is acquired from the navigation device, a display state of the direction indicator, or the like. Further, the illuminance, temperature, and weather conditions around the vehicle are respectively acquired from an illuminance sensor, an outside temperature sensor, and a wiper switch. However, the illuminance can be acquired from a headlight switch.

The driving changeover switch 23 is a switch mounted on a vehicle to switch between autonomous-driving and manual driving, which is operated by an occupant of the vehicle. For example, it is a switch installed in a steering of the vehicle.

The control-state presentation unit 61 displays whether the current control state is manual driving or autonomous-driving on a meter display unit, a display screen of the navigation device, a head-up display, and the like. Further, the control-state presentation unit 61 outputs a notification sound informing start and end of autonomous-driving, and presents whether learning of driving characteristics has been completed.

The actuator 31 receives an execution command from the travel assistance device 11 to drive respective units such as an accelerator, a brake, and a steering of the vehicle.

Next, respective units constituting the travel assistance device 11 are described. The travel assistance device 11 includes a learning-target data storage unit 41, a driving-characteristics learning unit 42, a driver identification unit 43, and an autonomous-driving control execution unit 45.

The learning-target data storage unit 41 acquires travel data relating to the travel state of the vehicle and pieces of environmental information relating to the travel environment around the vehicle from the travel-status detection unit 21, the surrounding-status detection unit 22, and the driving changeover switch 23, and stores therein predetermined learning target data required for learning driving characteristics of a driver in association with travel scenes such as the travel state and the travel environment of the vehicle.

The learning-target data storage unit 41 stores therein the predetermined learning target data required for learning driving characteristics of a driver for each of drivers. That is, the learning-target data storage unit 41 associates the learning target data with drivers, classifies the learning target data for each diver, and stores the learning target data therein.

Identification of a driver associated with the learning target data is performed by the driver identification unit 43 described later. New learning target data input to the learning-target data storage unit 41 from the travel-status detection unit 21, the surrounding-status detection unit 22, and the driving changeover switch 23 is temporarily stored in the learning-target data storage unit 41 as unregistered learning target data, during a period until identification of a driver associated with the learning target data is performed by the driver identification unit 43. Further, after identification of a driver associated with the learning target data has been performed by the driver identification unit 43, the learning target data is registered in the learning-target data storage unit 41 as learning target data corresponding to the driver identified by the driver identification unit 43. As a result, the learning target data becomes learning target data registered in the learning-target data storage unit 41. It suffices that the timing to identify the driver is a timing at which the driver can be identified such as a timing after driving 3 kilometers, a timing after driving for 10 minutes, and a timing after having acquired a predetermined amount of data (a timing after having acquired a predetermined amount of data such as 100 plots or 1 kilobyte).

The learning-target data storage unit 41 may store therein a deceleration timing during manual driving by a driver. The learning-target data storage unit 41 may store therein a deceleration timing in a case of stopping at a stop position such as a stop line set at an intersection or the like, a deceleration timing in a case of stopping behind a preceding vehicle being stopping, or a deceleration timing in a case of traveling following the preceding vehicle. Further, the learning-target data storage unit 41 may store therein the behavior of the vehicle at the time of operating the brake, such as a brake operating position, which is a position at which the brake is operated with respect to a stop position, a distance with respect to the stop position, a vehicle velocity at the time of operating the brake, and an acceleration rate.

The "deceleration timing" includes a timing when a driver operates the brake (a brake pedal) and the brake is operated at the time of stopping a vehicle at the stop position, a timing when deceleration actuates on the vehicle, a timing when an operation of the accelerator ends, or a timing when an operation of the brake pedal is started. Alternatively, the "deceleration timing" may include a timing when an operation amount of the brake pedal (depression amount) by a driver becomes equal to or larger than a predetermined amount set in advance, or a timing when an operation amount of the accelerator pedal (depression amount) by a driver becomes equal to or smaller than a predetermined amount set in advance. Alternatively, the "deceleration timing" may include a timing when a driver operates the brake and a control amount at the time of operating the brake has reached a certain value set in advance, or a timing when an increasing rate of the control amount at the time of operating the brake has reached a certain value.

That is, a timing when a control amount of the brake or an increasing rate of the control amount has reached a certain value, although not having reached the predetermined deceleration by the brake operation, may be set as the "deceleration timing". That is, the "deceleration timing" is a concept including a timing when the brake is operated (a brake start timing), an accelerator-off timing (a brake start timing), a timing when the control amount of the brake has reached a certain value, and a timing when the increasing rate of the control amount of the brake has reached a certain value. In other words, it is a timing when a driver feels a brake operation.

The brake in the present embodiment includes a hydraulic brake, an electronic control brake, and a regenerative brake. It can also include a deceleration actuating state even if the hydraulic brake, the electronic control brake, or the regenerative brake is not being operated.

Further, the learning-target data storage unit 41 may store therein an inter-vehicular distance between a vehicle and a preceding vehicle during manual driving by a driver. The learning-target data storage unit 41 may store therein pieces of data other than the inter-vehicular distance such as an inter-vehicular distance during stop, a relative velocity with respect to the preceding vehicle, a steering angle, a deceleration rate, and a duration time while following the preceding vehicle.

Further, the learning-target data storage unit 41 may store therein a deceleration start speed when a vehicle stops at an intersection, a braking distance when a vehicle stops at an intersection, and the like. Further, the learning-target data storage unit 41 may store therein pieces of data such as an operation amount of the brake pedal and the accelerator pedal of a vehicle, a vehicle velocity and a deceleration rate, and a distance to a stop line at an intersection, during a deceleration operation.

The learning-target data storage unit 41 may store therein environmental information in which a vehicle is placed, other than these pieces of information. As the environmental information, the number of lanes, a road curvature, a speed limit, a road grade, and the presence of a temporary stop regulation of a road on which the vehicle is traveling, a display state of a traffic light, a distance from the vehicle to an intersection, the number of vehicles that are traveling in front of the vehicle, a display state of a direction indicator, the weather, temperature, or illuminance around the vehicle, and the like can be mentioned.

The driving-characteristics learning unit 42 reads learning target data stored in the learning-target data storage unit 41 and learns the driving characteristics of a driver corresponding to the learning target data, taking into consideration the travel state and the influence degree from the travel environment. The driving-characteristics learning unit 42 learns the driving characteristics for each of the learning target data based on the learning target data (unregistered learning target data and registered learning target data) stored in the learning-target data storage unit 41. The driving-characteristics learning unit 42 associates learning results calculated in this manner with drivers, classifies the learning results for each driver, and stores the learning results therein.

Identification of a driver associated with the learning result is performed by the driver identification unit 43 described later. The learning result newly calculated by the driving-characteristics learning unit 42 is temporarily stored in the driving-characteristics learning unit 42 as an unregistered learning result, during a period until the driver identification unit 43 identifies a driver to be associated with the learning result. Further, after the driver identification unit 43 has identified a driver to be associated with the learning result, the learning result is registered in the driving-characteristics learning unit 42 as the learning result corresponding to the driver identified by the driver identification unit 43. As a result, the learning result becomes a learning result registered in the driving-characteristics learning unit 42.

Learning performed by the driving-characteristics learning unit 42 may be performed on a real time basis simultaneously with storage of the learning target data in the learning-target data storage unit 41. Alternatively, the learning performed by the driving-characteristics learning unit 42 may be performed every predetermined time, or at a timing when a certain amount of learning target data has been accumulated in the learning-target data storage unit 41.

The driver identification unit 43 identifies a driver based on an unregistered learning result temporarily stored in the learning-target data storage unit 41. Specifically, the driver identification unit 43 compares the unregistered learning result stored in the learning-target data storage unit 41 with a registered learning result.

As a result of comparison by the driver identification unit 43, when a registered learning result having driving characteristics with a difference from the driving characteristics in the unregistered learning result being within a predetermined value has been found, the driver identification unit 43 identifies that a driver corresponding to the unregistered learning result is the same person as the driver in the registered learning result.

As a result of comparison by the driver identification unit 43, when a registered learning result having driving characteristics with a difference from the driving characteristics in the unregistered learning result being within a predetermined value has not been found, the driver identification unit 43 identifies that a driver corresponding to the unregistered learning result is a new driver (a driver who does not correspond to any driver having been registered).

When a learning result of a new driver is to be registered in the driving-characteristics learning unit 42, an approval with respect to registration of a driver may be requested to an occupant. This request can be made by using an in-vehicle display, or by using a speaker. After a request is made to the occupant, selection by the occupant may be received by a touch input on a display or by recognizing the occupant's voice by a microphone.

When a learning result of a new driver is to be registered in the driving-characteristics learning unit 42, it may be requested to the occupant to input information identifying a driver. This request may be made by using an in-vehicle display, or by using a speaker. After a request is made to the occupant, selection by the occupant may be received by a touch input on the display or by recognizing the occupant's voice by the microphone.

As a result of comparison by the driver identification unit 43, when a plurality of registered learning results having driving characteristics with a difference from the driving characteristics in the unregistered learning result being within a predetermined value have been found, the driver identification unit 43 requests the occupant to select any of the drivers corresponding to the found learning results. This request may be made by using an in-vehicle display, or by using a speaker. After a request is made to the occupant, selection by the occupant may be received by a touch input on the display or by recognizing the occupant's voice by the microphone.

The autonomous-driving control execution unit 45 executes autonomous-driving control when a vehicle travels in an autonomous-driving section or when a driver selects autonomous-driving by the driving changeover switch 23. At this time, the autonomous-driving control execution unit 45 applies the learning result acquired by the driving-characteristics learning unit 42 to the travel control of autonomous-driving.

The travel assistance device 11 is constituted by a general-purpose electronic circuit including a microcomputer, a microprocessor, and a CPU, and peripheral devices such as a memory. The travel assistance device 11 operates as the learning-target data storage unit 41, the driving-characteristics learning unit 42, the driver identification unit 43, and the autonomous-driving control execution unit 45 which are described above, by executing specific programs. The respective functions of the travel assistance device 11 can be implemented by one or a plurality of processing circuits. The processing circuit includes a programmed processing device such as a processing device including, for example, an electric circuit, and also includes an application specific integrated circuit (ASIC) arranged to execute the functions described in the embodiment and a device such as conventional circuit components.

[Process procedure for learning driving characteristics]

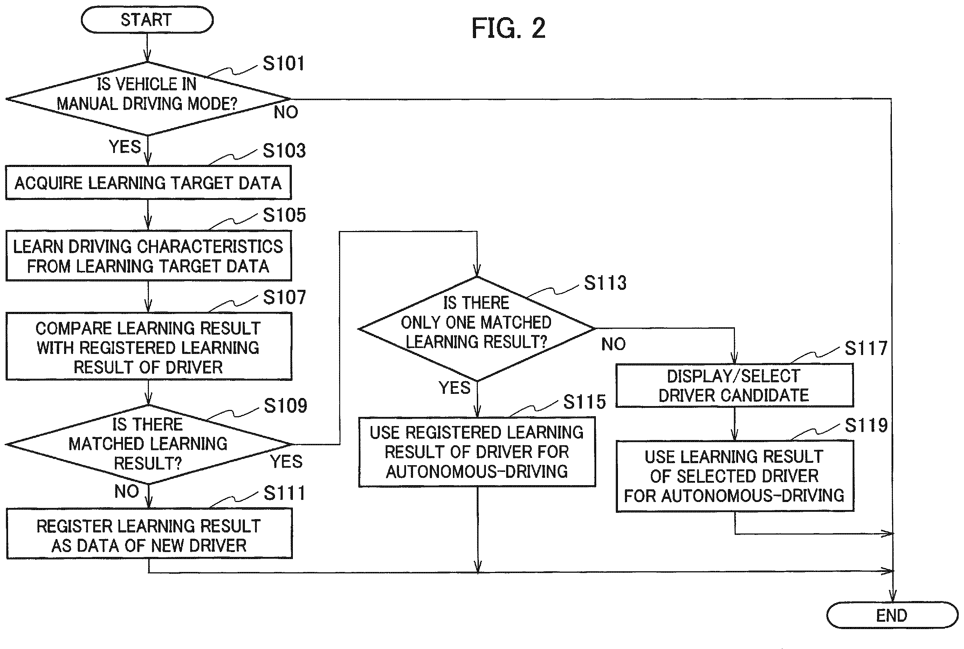

Next, the process procedure for learning driving characteristics by the travel assistance device 11 according to the present embodiment is described with reference to a flowchart in Fig. 2. The processing for learning driving characteristics illustrated in Fig. 2 is started when an ignition of a vehicle is turned on.

As illustrated in Fig. 2, first at Step S101, the travel assistance device 11 determines whether a vehicle is in a manual driving mode according to the state of the driving changeover switch 23. When the vehicle is in a manual driving mode, the process proceeds to Step S103, and when the vehicle is in an autonomous-driving mode, the travel assistance device 11 ends the processing for learning driving characteristics and executes autonomous-driving control.

At Step S103, the learning-target data storage unit 41 detects travel data relating to the travel state of the vehicle and environmental information relating to the travel environment around the vehicle from the travel-status detection unit 21, the surrounding-status detection unit 22, and the driving changeover switch 23. As the detected travel data, a vehicle velocity, a steering angle, an acceleration rate, a deceleration rate, an inter-vehicular distance from a preceding vehicle, a relative velocity with respect to the preceding vehicle, a current position, an expected course at an intersection in front of the vehicle, operation amounts of a brake pedal and an accelerator pedal, a duration time while following the preceding vehicle, a lighting state of a headlight, an operating condition of wipers, and the like are detected. Further, the learning-target data storage unit 41 detects, as the environmental information, the number of lanes, a road curvature, a speed limit, a road grade, and the presence of a temporary stop regulation on a road on which the vehicle is traveling, a display state of a traffic light, a distance from the vehicle to an intersection, the number of vehicles that are traveling in front of the vehicle, a display state of a direction indicator, and the weather, temperature, or illuminance around the vehicle. The new learning target data consisting of the travel data and the environmental information is temporarily stored in the learning-target data storage unit 41 as unregistered learning target data.

Next, at Step S105, the driving-characteristics learning unit 42 learns the driving characteristics of the driver corresponding to the learning target data, taking into consideration the travel state and the influence degree from the travel environment based on the learning target data stored in the learning-target data storage unit 41. A learning result acquired based on the unregistered learning target data is temporarily stored in the driving-characteristics learning unit 42 as an unregistered learning result.

Here, the driving-characteristics learning unit 42 creates a regression model (a multiple regression model) to obtain an equation quantitatively representing a relation between two or more kinds of data included in the learning target data, and performs learning by performing a regression analysis (a multiple regression analysis).

As a specific example, a case where data of a vehicle velocity V and an inter-vehicular distance D during a deceleration operation is acquired as the learning target data is considered. It is assumed that N measurement results $(V_1, D_1), (V_2, D_2), ..., (V_N, D_N)$ have been acquired for a set of two kinds of data of the vehicle velocity V and the inter-vehicular distance D. In the following descriptions, an ith measurement result is noted as $(V_i, D_i)$ (where i=1, 2, ..., N).

It is assumed that a linear model represented by the following equation (1) is established, assuming that $\beta_1$ and $\beta_2$ are regression coefficients, the inter-vehicular distance D is an explanatory variable (an independent variable), the vehicle velocity V is an objective variable (a dependent variable, an explained variable).

$$V = \beta_1 + \beta_2 D \qquad ... (1)$$

An error term $\varepsilon_i$ is defined by the following equation (2), assuming that an error from the regression model in the ith measurement result is $\varepsilon_i$.

$$\varepsilon_i = V_i - (\beta_1 + \beta_2 D_i) \text{ (where i=1, 2, ..., N)} \qquad ... (2)$$

In the equation (2), by using a least-squares method in which a square sum S (where $S = \sum \varepsilon_i^2$, i=1, 2, ..., N) of the error term $\varepsilon_i$ is set to minimum, using $\beta_1$ and $\beta_2$ as parameters, an equation quantitatively representing a relation between N measurement results relating to the set of two kinds of data of the vehicle velocity V and the inter-vehicular distance D can be estimated. The parameters $\beta_1$ and $\beta_2$ when the square sum S of the error term $\varepsilon_i$ is set to minimum are estimated amounts of the regression coefficients $\beta_1$ and $\beta_2$ appearing in the equation (1), and are referred to as least squares estimators $L_1$ and $L_2$. By deciding the least squares estimators $L_1$ and $L_2$, a quantitative relation between the vehicle velocity V and the inter-vehicular distance D can be estimated.

A regression residual $E_i$ is defined according to the following equation (3) based on the least squares estimators $L_1$ and $L_2$.

$$E_i = V_i - (L_1 + L_2 D_i) \text{ (where i=1, 2, ..., N)} \qquad ... (3)$$

In the learning target data to be subjected to the regression analysis, when the number N of measurement results is sufficiently large, it is considered that the regression residual $E_i$ follows normal distribution (an average 0, a standard deviation $\sigma_E$). Therefore, the standard deviation of the regression residual $E_i$ is estimated. In the following descriptions, an estimate of the standard deviation $\sigma_E$ of the regression residual $E_i$ is designated as a standard error $s_E$. The standard error $s_E$ is defined by the following equation (4).

$$s_E = \{(\Sigma E_i^2)/(N-2)\}^{1/2} \qquad \ldots (4)$$

Here, the reason why the square sum ($\Sigma E_i^2$) of the regression residual $E_i$ is divided by (N-2) in the definition of the standard error $s_E$ is related with a fact that there are two least squares estimators. In order to maintain the invariance of the standard error $s_E$, the square sum ($\Sigma E_i^2$) is divided by (N-2).

The least squares estimators $L_1$ and $L_2$ are linear functions of the regression residual $E_i$ that is considered to follow the normal distribution, and thus it is considered that the least squares estimator $L_1$ follows the normal distribution (an average $\beta_1$, a standard deviation $\sigma_{L1}$), and the least squares estimator $L_2$ follows the normal distribution (an average $\beta_2$, a standard deviation $\sigma_{L2}$). Therefore, the standard deviations $\sigma_{L1}$ and $\sigma_{L2}$ of the least squares estimators $L_1$ and $L_2$ can be estimated based on the equation (3) and the standard error $s_E$. In the following descriptions, an estimate of the standard deviation $\sigma_{L1}$ of the least squares estimator $L_1$ is designated as a standard error $s_{L1}$ and an estimate of the standard deviation $\sigma_{L2}$ of the least squares estimator $L_2$ is designated as a standard error $s_{L2}$.

The driving-characteristics learning unit 42 performs learning of the driving characteristics based on the learning target data, by estimating the least squares estimators $[L_1, L_2]$ and the standard errors $[s_{L1}, s_{L2}]$ as described above. The driving-characteristics learning unit 42 stores therein the acquired least squares estimators $[L_1, L_2]$ and the standard errors $[s_{L1}, s_{L2}]$ as the driving characteristics relating to the learning result acquired from the learning target data.

The driving-characteristics learning unit 42 may also store therein the number N of pieces of data included in the learning target data that has been used for learning. The driving-characteristics learning unit 42 may further store therein the travel frequency in an area where the vehicle travels, corresponding to the learning target data that has been used for learning.

In the above descriptions, a regression model between the vehicle velocity V and the inter-vehicular distance D is mentioned as an example. However, a similar regression analysis (a multiple regression analysis) may be performed by using not only the vehicle velocity V and the inter-vehicular distance D, but also other two or more pieces of data. In the above descriptions, since the regression analysis is performed between two pieces of data, two values $L_1$ and $L_2$ are acquired as the least squares estimator. Generally, when a regression analysis between M pieces of data is performed, M values $[L_1, L_2, \ldots, L_M]$ are acquired as the least squares estimator. Similarly, M values $[s_{L1}, s_{L2} \ldots, s_{LM}]$ are acquired as the standard error corresponding to the least squares estimator.

Further, in the above descriptions, a linear model (linear regression) that assumes a linear relation between pieces of data is mentioned as a regression model. However, other than the linear model, the linear model method described above can be used, so long as it is a model that can be transformed to a linear model by functional transformation or the like. For example, an elastic model in which an explained variable is proportional to a power of an explanatory variable, or an elastic model (exponential regression) in which an explained variable is proportional to an exponential function of an explanatory variable may be used. Alternatively, a linear model, an elastic model, or a combination of elastic models may be used.

In the above descriptions, it is considered that when the number N of measurement results is sufficiently large, the regression residual $E_i$ follows the normal distribution. Generally, however, the regression residual $E_i$ does not always follow the normal distribution. For example, when the number N of measurement results is small (for example, N is less than 30), learning of the driving characteristics may be performed by assuming a distribution other than the normal distribution, matched with the property of data. For example, learning of the driving characteristics may be performed by assuming binominal distribution, Poisson distribution, or uniform distribution other than the normal distribution. Learning of the driving characteristics may be performed by performing non-parametric estimation.

Learning of the driving characteristics may be performed by calculating an output error at the time of inputting training data to a neural network and performing adjustment of various parameters of the neural network so that the error becomes minimum, as in the deep learning (hierarchical learning, machine learning) using the neural network, other than the methods described above.

In the above descriptions, it is assumed to perform learning by using all the measurement results included in the learning target data, however, selection or weighting of measurement results to be used for learning may be performed according to a travel area where a vehicle travels. For example, pieces of frequency information of the route and places (a place of departure, a through location, and a destination) where a vehicle travels is decided based on one or a plurality of pieces of learning target data, and when the measurement result included in the learning target data being learned has been measured in an area having a high travel frequency, contribution of the measurement result to the square sum S of an error term $\varepsilon_i$ to be used in the regression analysis may be set high.

Specifically, the square sum S of the error term $\varepsilon_i$ may be defined as a weighting parameter $W_i$ according to the following equation (5). Here, when selection of the measurement results to be used for learning is to be performed, the weighting parameter $W_i$ takes a value 1 with respect to the measurement result to be used for learning, and the weighting parameter $W_i$ takes a value 0 with respect to the measurement result not to be used for learning. When weighting of measurement results to be used for learning is to be performed, the weighting parameter $W_i$ takes a larger value, as the travel frequency in an area corresponding to the measurement result becomes higher.

$$S = \Sigma(W_i \cdot \varepsilon_i^2) \qquad \dots (5)$$

By performing selection or weighting of the measurement results to be used for learning according to a travel area where the vehicle travels, as the travel frequency in the area where the vehicle travels becomes higher, the driving characteristics during manual driving by a driver in the area can be learned with a higher degree of priority. As the travel frequency in the area where the vehicle travels becomes higher, it is considered that the driver is used to driving in the area, and it is considered that the driving characteristics of the driver appear strongly in the learning target data.

In the above descriptions, the driving characteristics and the standard error are estimated from the learning target data by the regression analysis. However, a mean value and a standard deviation of the deceleration timing may be estimated respectively as the driving characteristics and the standard error, based on the frequency distribution relating to the deceleration timing (the deceleration timing is plotted on the horizontal axis, and the frequency is plotted on the vertical axis) acquired from the measurement results. Other than this estimation, a mean value and a standard deviation of the inter-vehicular distance may be estimated respectively as the driving characteristics and the standard error, based on the frequency distribution relating to the inter-vehicular distance between a vehicle and a preceding vehicle (the inter-vehicular distance is plotted on the horizontal axis, and the frequency is plotted on the vertical axis) acquired from the measurement results. Further, a mean value and a standard deviation of the vehicle velocity during a deceleration operation may be estimated as the driving characteristics and the standard error based on the frequency distribution (the vehicle velocity is plotted on the horizontal axis, and the frequency is plotted on the vertical axis) acquired from the measurement results.

Next, at Step S107, the driver identification unit 43 identifies a driver based on unregistered learning result temporarily stored in the learning-target data storage unit 41. Specifically, the driver identification unit 43 compares the unregistered learning result with the registered learning results stored in the learning-target data storage unit 41.

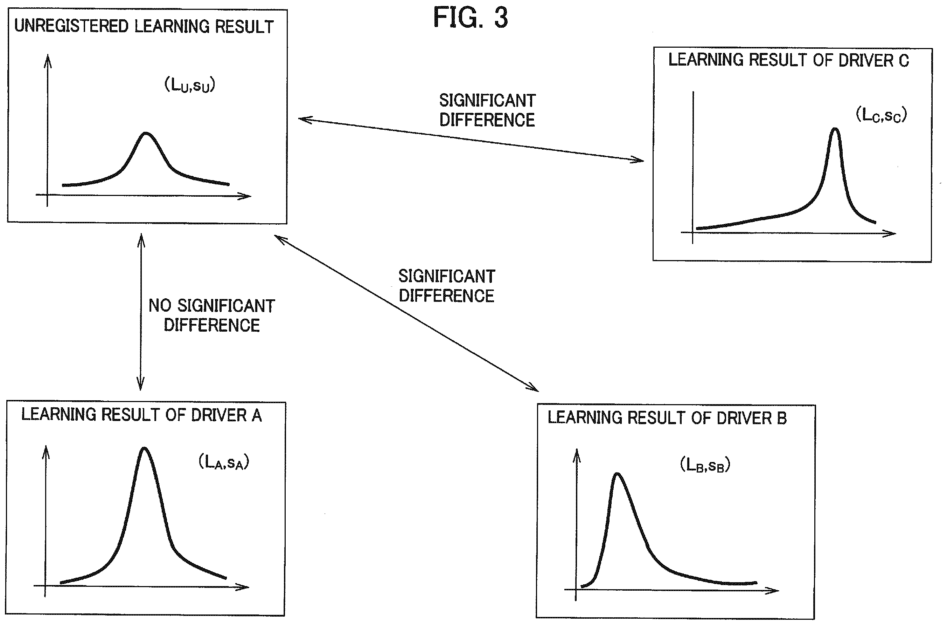

As illustrated in Fig. 3, it is assumed that an unregistered learning result (as the driving characteristics, a least squares estimator Lu and a standard error $s_U$) is acquired, and a learning result of a driver A (as the driving characteristics, a least squares estimators $L_A$ and a standard error $s_A$), a learning result of a driver B (as the driving characteristics, a least squares estimators $L_B$ and a standard error $s_B$), and a learning result of a driver C (as the driving characteristics, a least squares estimators $L_C$ and a standard error $s_C$) have been already registered as the registered learning results.

The driver identification unit 43 compares the learning results with each other by conducting a t-test for the driving characteristics.

When the unregistered learning result is to be compared with the learning result of the driver A, the driver identification unit 43 designates a null hypothesis as "$L_U = L_A$" and an alternate hypothesis as "$L_U \neq L_A$", and defines a two-sample t-statistic defined by the following equation (6).

$$T_{UA} = \{L_U - L_A\} / \{s_U^2 + s_A^2\}^{1/2} \qquad \dots (6)$$

When the least squares estimator $L_U$ and the least squares estimator $L_A$ follow the normal distribution, the two-sample t-statistic $T_{UA}$ between the unregistered learning result and the learning result of the driver A follow a t-distribution. The t-distribution has a degree of freedom depending on the learning target data corresponding to the unregistered learning result, the learning target data corresponding to the learning result of the driver A, and the like.

The driver identification unit 43 calculates the two-sample t-statistic $T_{UA}$ and conducts a test with a significance level $\alpha = 0.05$. That is, the level regarded as having a significant difference is set to 5%.

The significance level $\alpha$ may be changed based on the number of measurement results included in the learning target data.

Similarly, the driver identification unit 43 calculates a two-sample t-statistic $T_{UB}$ between the unregistered learning result and the learning result of the driver B and calculates a two-sample t-statistic $T_{UC}$ between the unregistered learning result and the learning result of the driver C.

In this manner, the driver identification unit 43 calculates the two-sample t-statistic between the unregistered learning result and the registered learning result. If the registered learning result has not been stored in the learning-target data storage unit 41, the driver identification unit 43 does not perform comparison between the learning results described above.

Next, at Step S109, the driver identification unit 43 determines whether there is a registered learning result matched with the unregistered learning result.

The driver identification unit 43 rejects the null hypothesis when the calculated two-sample t-statistic $T_{UA}$ becomes a value largely deviated from 0, and particularly, when an absolute value of the two-sample t-statistic $T_{UA}$ becomes a value larger than a percentage point $T_{\alpha/2}$ in the t-distribution defined by the significance level $\alpha$.

Here, the percentage point $T_{\alpha/2}$ is a value of the two-sample t-statistic in which an upper probability in the t-distribution becomes $\alpha/2$. An aggregate (a rejection region) of statistic values to reject the null hypothesis includes both a positive region deviated from 0 and a negative region deviated from 0, and a two-sided test needs to be conducted. Therefore, the upper probability is set to a value half the significance level $\alpha$.

When the null hypothesis "$L_U=L_A$" is rejected, the driver identification unit 43 determines that the unregistered learning result and the learning result of the driver A do not match with each other. Further, the driver identification unit 43 identifies that a driver corresponding to the unregistered learning result is not the driver A.

On the other hand, when the null hypothesis "$L_U=L_A$" is adopted (not rejected), the driver identification unit 43 judges that the unregistered learning result and the learning result of the driver A match with each other. Further, the driver identification unit 43 identifies that a driver corresponding to the unregistered learning result is the driver A.

That is, the driver identification unit 43 compares Lu representing the driving characteristics in the unregistered learning result with the driving characteristics in the learning result of the driver A, and if a difference between $L_U$ and $L_A$ is equal to or smaller than a predetermined value, the driver identification unit 43 identifies that a driver corresponding to the unregistered learning result is the driver A in the registered learning result.

Similarly, the driver identification unit 43 determines whether the unregistered learning result and the learning result of the driver B match with each other based on the two-sample t-statistic $T_{UB}$, and identifies whether a driver corresponding to the unregistered learning result is the driver B. Further, the driver identification unit 43 determines whether the unregistered learning result and the learning result of the driver C match with each other based on the two-sample t-statistic Tuc, and identifies whether a driver corresponding to the unregistered learning result is the driver C.

If a registered learning result matched with the unregistered learning result is not found, or a registered learning result has not been stored in the learning-target data storage unit 41, the driver identification unit 43 identifies that a driver corresponding to the unregistered learning result is a new driver (a driver not corresponding to any of the registered drivers).

As a result of comparison by the driver identification unit 43, if there is no registered learning result matched with the unregistered learning result (NO at Step S109), the process proceeds to Step S111, and if there is a registered learning result matched with the unregistered learning result (YES at Step S109), the process proceeds to Step S113.

At Step S111, the learning-target data storage unit 41 registers therein the unregistered learning target data as learning target data corresponding to the new driver. Further, the driving-characteristics learning unit 42 registers the unregistered learning result as a learning result corresponding to the new driver.

At Step S113, as a result of comparison by the driver identification unit 43, if there is only one registered learning result matched with the unregistered learning result (YES at Step S113), the process proceeds to Step S115, and the autonomous-driving control execution unit 45 applies the registered learning result matched with the unregistered learning result to autonomous-driving.

At Step S113, if there are a plurality of registered learning results matched with the unregistered learning result (NO at Step S113), the process proceeds to Step S117, and the control-state presentation unit 61 displays a plurality of driver candidates corresponding to the matched registered learning results.

At Step S119, when one driver is selected among the plurality of driver candidates displayed on the control-state presentation unit 61 by a user of the travel assistance device 11, the autonomous-driving control execution unit 45 applies the registered learning result matched with the unregistered learning result, which is a learning result of the selected driver, to autonomous-driving.

In the above descriptions, the t-test for the driving characteristics is conducted by using one piece of driving characteristics (one least squares estimator) among the driving characteristics included in the learning result. However, the t-test for the driving characteristics may be conducted by combining two or more pieces of driving characteristics. As compared with a case where only one piece of driving characteristics is used, more accurate comparison between learning results and identification of the driver can be performed by combining more pieces of driving characteristics.

At Step S109 described above, when a driver corresponding to the unregistered learning target data is identified, the learning result acquired by performing learning using both the unregistered learning target data and the learning result corresponding to the identified driver may be applied to autonomous-driving, instead of applying the registered learning result to autonomous-driving at Step S115 and Step S119.

That is, at Step S115 and Step S119, the unregistered learning target data may be merged with the learning target data of the identified driver and the learning result based on the newly acquired learning target data may be applied to autonomous-driving. By performing the process, the data size of the learning target data can be increased, and a learning result on which the driving characteristics of the identified driver is strongly reflected can be applied to autonomous-driving.

When the number N of measurement results included in the learning target data corresponding to the unregistered learning result is small (for example, N is less than 30), distribution matched with the learning target data may be decided to calculate a test amount corresponding to the distribution, instead of calculating the two-sample t-statistic that assumes to follow the t-distribution. Alternatively, non-parametric estimation may be performed based on the learning target data to perform comparison between the learning results.

Other than the methods described above, comparison between the learning results may be performed by deep learning (hierarchical learning, machine learning) using a neural network.

For the comparison between the learning results, various methods can be mentioned as described above. Such a method that can reject or adopt the null hypothesis that "learning results match with each other", by calculating a predetermined probability based on two or more learning results to be compared, and comparing the probability with the significance level, can be used as a comparison method of learning results in the present invention.

[Effects of embodiments]

As described above in detail, in the travel assistance method according to the present embodiment, in a vehicle capable of switching manual driving by a driver and autonomous-driving, a driver is identified by using driving characteristics during manual driving by a driver, and travel control is executed based on a learning result corresponding to the identified driver. Accordingly, the driver can be identified without requiring a sensor or redundant operations for identifying the driver, and appropriate travel assistance suitable for the driver can be performed.

Particularly, since a driver can be identified based on the driving characteristics during manual driving, instead of using a sensor for identifying a driver such as a sensor for performing face recognition or fingerprint recognition, cost reduction can be achieved as compared with a product in which a sensor for identifying a driver is installed. For example, a cost of about 5000 Yen of the fingerprint authentication sensor based on the mass-produced products can be reduced from the manufacturing cost.

Further, the travel assistance method according to the present embodiment may be such that the driving characteristics during manual driving and the learning result corresponding to a driver are compared with each other, and when a difference between the driving characteristics during manual driving and driving characteristics in the learning result is larger than a predetermined value, the driving characteristics during manual driving is registered as a learning result of a new driver. Accordingly, a driver can be identified accurately based on unique driving characteristics of the driver. Further, an unregistered new driver can be automatically registered without requiring any special operations by the driver.

Further, the travel assistance method according to the present embodiment may request an occupant to provide an approval to registration, when a learning result of a new driver is to be registered. Accordingly, it can be avoided that a new driver who is not intended to be registered by the occupant is registered. Therefore, a travel assistance method meeting the intention of the occupant can be realized and it can be prevented that a new driver is registered by mistake.

Further, the travel assistance method according to the present embodiment may request the occupant to input information that identifies a driver, when a learning result of a new driver is registered. Accordingly, a driver corresponding to the learning result can be set. Therefore, when the learning result is used after the setting, for example, when selection of a driver is requested to the occupant, the occupant can select an appropriate learning result. As the information that identifies a driver, an input of attributes such as age and gender may be requested.

Further, the travel assistance method according to the present embodiment may be such that the driving characteristics during manual driving is compared with a learning result corresponding to a driver, and when a plurality of learning results having driving characteristics in which a difference between the driving characteristics during manual driving and driving characteristics in the learning result is within a predetermined value have been found, selection of a driver from a plurality of drivers corresponding to the found learning results is requested to an occupant. Accordingly, a user can select a driver, among the plurality of drivers corresponding to the found learning results, to be based on at the time of executing travel control of autonomous-driving. Further, it can be avoided that a learning result which is not intended to be used by the user is used.

Further, the travel assistance method according to the present embodiment, as the travel frequency in an area where a vehicle travels becomes higher, may use more preferentially driving characteristics of the area as the driving characteristics during manual driving at the time of identifying a driver. It is considered that as the travel frequency in the area where the vehicle travels becomes higher, the driver is more used to driving in the area, and the driving characteristics of the driver is more strongly reflected in the learning target data. Therefore, by providing the degree of priority based on the travel frequency in the area, a driver can be identified more accurately.

Further, the travel assistance method according to the present embodiment may use a deceleration timing during manual driving, an inter-vehicular distance between a vehicle and a preceding vehicle, a vehicle velocity during a deceleration operation, or a combination thereof as the driving characteristics during manual driving. Among the driving characteristics appearing in travel data of the vehicle, the driving characteristics such as the deceleration timing during manual driving, the inter-vehicular distance between the vehicle and the preceding vehicle, and the vehicle velocity during the deceleration operation are driving characteristics in which the personality of a driver tends to appear as compared with other driving characteristics. Therefore, by using these driving characteristics, the driver can be identified more accurately.

Further, the travel assistance method according to the present embodiment may be such that when there is no registered learning result, identification of a driver based on the learning result is not performed. Therefore, a processing time required for identifying a driver can be decreased, thereby enabling to achieve a high speed as the entire system.

Further, when there is only one registered learning result, for example, when there is only one driver who drives a vehicle on a daily basis, such a case may occur that identification of a driver is not necessary originally. In such a case, it is also possible that identification of a driver based on the learning result is not performed. Therefore, a processing time required for identifying a driver can be decreased, thereby enabling to achieve a high speed as the entire system.

Further, the travel assistance method according to the present embodiment may learn the driving characteristics for each driver by an external server provided outside a vehicle. Accordingly, a processing load of the vehicle can be reduced.

Further, even when a driver uses a plurality of vehicles, learning results from the vehicles are integrated and managed by an external server and the integrated learning results are distributed from the external server to a vehicle that requires travel control of autonomous-driving, so that the integrated learning results can be shared among the vehicles. Accordingly, appropriate travel assistance suitable for a driver can be performed. It is particularly useful to perform processing by the external server, in a case where it is assumed that a driver uses a plurality of vehicles such as car sharing.

Although the contents of the present invention have been described above with reference to the embodiments, the present invention is not limited to these descriptions, and it will be apparent to those skilled in the art that various modifications and improvements can be made. It should not be construed that the present invention is limited to the descriptions and the drawings that constitute a part of the present disclosure. On the basis of the present disclosure, various alternative embodiments, practical examples, and operating techniques will be apparent to those skilled in the art.

In is needless to mention that the present invention also includes various embodiments that are not described herein. Therefore, the technical scope of the present invention is to be defined only by the invention specifying matters according to the scope of claims appropriately obtained from the above descriptions.

Respective functions described in the above respective embodiments may be implemented on one or more processing circuits. The processing circuits include programmed processors such as processing devices and the like including electric circuits. The processing devices include devices such as application specific integrated circuits (ASIC) and conventional circuit constituent elements that are arranged to execute the functions described in the embodiments.

REFERENCE SIGNS LIST

11    travel assistance device
21    travel-status detection unit
22    surrounding-status detection unit
23    driving changeover switch
31    actuator
41    learning-target data storage unit
42    driving-characteristics learning unit
43    driver identification unit
45    autonomous-driving control execution unit
61    control-state presentation unit

**Claims**

1.  A travel assistance method for learning driving characteristics for each driver from travel data during manual driving by a driver and applying a learning result to travel control of autonomous-driving, in a vehicle capable of switching manual driving by a driver and autonomous-driving, the travel assistance method comprising:

identifying a driver by using driving characteristics during manual driving by a driver; and

executing the travel control based on the learning result corresponding to the identified driver.

2. The travel assistance method according to claim 1, further comprising:

comparing the driving characteristics during manual driving with the learning result corresponding to a driver; and

when a difference between the driving characteristics during manual driving and driving characteristics in the learning result is larger than a predetermined value, registering the driving characteristics during manual driving as a learning result of a new driver.

3. The travel assistance method according to claim 2, further comprising requesting an occupant to provide an approval to registration, when a learning result of a new driver is to be registered.

4. The travel assistance method according to claim 2 or 3, further comprising, when a learning result of a new driver is to be registered, requesting an occupant to input information that identifies the driver.

5. The travel assistance method according to any one of claims 1 to 4, further comprising:

comparing the driving characteristics during manual driving with the learning result corresponding to a driver; and

when a plurality of learning results having driving characteristics in which a difference between the driving characteristics during manual driving and driving characteristics in the learning result is within a predetermined value have been found,

requesting an occupant to select any of drivers corresponding to the found learning results.

6. The travel assistance method according to any one of claims 1 to 5, further comprising, as a travel frequency in an area where the vehicle travels becomes higher, using more preferentially driving characteristics of the area as driving characteristics during manual driving at the time of identifying the driver.

7. The travel assistance method according to any one of claims 1 to 6, further comprising using a deceleration timing during manual driving as the driving characteristics during manual driving.

8. The travel assistance method according to any one of claims 1 to 7, further comprising using an inter-vehicular distance between the vehicle and a preceding vehicle as the driving characteristics during manual driving.

9. The travel assistance method according to any one of claims 1 to 8, further comprising using a vehicle velocity during a deceleration operation during manual driving as the driving characteristics during manual driving.

10. The travel assistance method according to any one of claims 1 to 9, further comprising, when a registered learning result is not present, or when there is only one registered learning result, not performing identification of the driver based on the learning result.

11. The travel assistance method according to any one of claims 1 to 10, further comprising learning driving characteristics for each driver by an external server provided outside the vehicle.

12. A travel assistance device that learns driving characteristics for each driver from travel data during manual driving by a driver and applies a learning result to travel control of autonomous-driving, in a vehicle capable of switching manual driving by a driver and autonomous-driving, the travel assistance device comprising:

a driver identification circuit that identifies the driver by using driving characteristics during manual driving by a driver; and

an autonomous-driving control execution circuit that executes the travel control based on the learning result corresponding to the identified driver.

# FIG. 1

100

11
**TRAVEL ASSISTANCE DEVICE**

21
TRAVEL-STATUS
DETECTION UNIT

22
SURROUNDING-STATUS
DETECTION UNIT

23
DRIVING CHANGEOVER
SWITCH

41
LEARNING-TARGET
DATA STORAGE UNIT

42
DRIVING-CHARACTERISTICS
LEARNING UNIT

43
DRIVER
IDENTIFICATION
UNIT

45
AUTONOMOUS-DRIVING
CONTROL EXECUTION
UNIT

61
CONTROL-STATE
PRESENTATION UNIT

31
ACTUATOR

EP 3 686 862 A1

FIG. 2

START

S101 — IS VEHICLE IN MANUAL DRIVING MODE? — NO

YES ↓

S103 — ACQUIRE LEARNING TARGET DATA

S105 — LEARN DRIVING CHARACTERISTICS FROM LEARNING TARGET DATA

S107 — COMPARE LEARNING RESULT WITH REGISTERED LEARNING RESULT OF DRIVER

S109 — IS THERE MATCHED LEARNING RESULT? — YES / NO

S111 — REGISTER LEARNING RESULT AS DATA OF NEW DRIVER

S113 — IS THERE ONLY ONE MATCHED LEARNING RESULT? — YES / NO

S115 — USE REGISTERED LEARNING RESULT OF DRIVER FOR AUTONOMOUS-DRIVING

S117 — DISPLAY/SELECT DRIVER CANDIDATE

S119 — USE LEARNING RESULT OF SELECTED DRIVER FOR AUTONOMOUS-DRIVING

END

EP 3 686 862 A1

## FIG. 3

**INTERNATIONAL SEARCH REPORT**

International application No.

PCT/JP2017/033920

A. CLASSIFICATION OF SUBJECT MATTER
Int. Cl. G08G1/16(2006.01)i, B60W40/09(2012.01)i, G08G1/00(2006.01)i

According to International Patent Classification (IPC) or to both national classification and IPC

B. FIELDS SEARCHED

Minimum documentation searched (classification system followed by classification symbols)
Int. Cl. G08G1/16, B60W40/09, G08G1/00

Documentation searched other than minimum documentation to the extent that such documents are included in the fields searched
Published examined utility model applications of Japan     1922-1996
Published unexamined utility model applications of Japan   1971-2017
Registered utility model specifications of Japan           1996-2017
Published registered utility model applications of Japan   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2016-216021 A (PANASONIC INTELLECTUAL PROPERTY MANAGEMENT CO., LTD.) 22 December 2016, paragraphs [0197]-[0210], [0239], fig. 1, 22 (Family: none) | 1-12 |
| Y | WO 2017/057060 A1 (SONY CORP.) 06 April 2017, paragraphs [0029]-[0033], [0045], [0078]-[0082], [0102]-[0106], [0115], [0120], [0198]-[0211], fig. 1-4, 13 (Family: none) | 1-12 |
| Y | JP 2016-215658 A (ALPINE ELECTRONICS, INC.) 22 December 2016, paragraphs [0012]-[0031], fig. 1-8 (Family: none) | 1-12 |
| Y | JP 2012-69037 A (TOYOTA MOTOR CORP.) 05 April 2012, paragraphs [0004], [0009]-[0013], [0059]-[0061], [0079]-[0117], fig. 1-12 (Family: none) | 1-12 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 15.11.2017 | 28.11.2017 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
|---|
| PCT/JP2017/033920 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2008-222167 A (TOYOTA MOTOR CORP.) 25 September 2008, paragraphs [0004], [0005], [0017], [0024]-[0029], [0048]-[0050], [0061], fig. 1-5 (Family: none) | 1-12 |
| Y | JP 2008-137639 A (QUALITY KK) 19 June 2008, paragraph [0186] (Family: none) | 2-11 |
| Y | JP 2015-510622 A (MICROSOFT CORP.) 09 April 2015, paragraph [0016] & US 2013/0156274 A1, paragraph [0020] & WO 2013/095977 A1 & EP 2795570 A1 & CN 103049520 A & KR 10-2014-0105478 A | 5-11 |
| Y | JP 2003-80970 A (MITSUBISHI MOTORS CORP.) 19 March 2003, paragraphs [0009], [0013], [0014], [0021], fig. 4 (Family: none) | 6-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016216021 A